# EUROPÄISCHE PATENTSCHRIFT

(11) **EP 1 099 061 B1**
(45) Veröffentlichungstag und Bekanntmachung des Hinweises auf die Patenterteilung: **06.11.2002**
(21) Anmeldenummer: 99938337.5
(22) Anmeldetag: 26.07.1999
(51) Int. Cl.: F16D 69/04

(54) **SCHEIBENBREMSBELAG FÜR SCHIENEN- ODER NUTZFAHRZEUGE**
DISK BRAKE PAD FOR RAIL OR UTILITY VEHICLES
GARNITURE DE FREIN A DISQUE DESTINEE A DES VEHICULES FERROVIAIRES OU UTILITAIRES

(30) Priorität: 25.07.1998 DE 19833628; 21.11.1998 DE 19853828
(43) Veröffentlichungstag der Anmeldung: 16.05.2001
(73) Patentinhaber: TMD Friction EsCo GmbH, 45356 Essen (DE)
(72) Erfinder: RUSSO, Sergio, I-83100 Aiello del Sabato (IT); BUGAJ, Richard, D-46282 Dorsten (DE)
(74) Vertreter: Zenz, Joachim Klaus, Dipl.-Ing.
(86) Internationale Anmeldenummer: EP9905321
(87) Internationale Veröffentlichungsnummer: WO00006923

(56) Entgegenhaltungen:
- DE-A- 4 436 457
- DE-C- 19 727 705
- DE-U- 29 508 322
- US-A- 5 538 108

## Beschreibung

Die Erfindung betrifft einen Scheibenbremsbelag für Schienen- oder Nutzfahrzeuge, mit einer Ankerplatte und mehreren auf der Ankerplatte befestigten Reibkörpern.

Scheibenbremsen sind hochbelastete Teile an Fahrzeugen. Sie müssen z.T. erhebliche Massen verzögern und innerhalb kürzester Zeit bis zum Stillstand bringen. Schienen- und Nutzfahrzeuge bedingen auf Grund ihres hohen Gewichts sehr hohe Bremsmomente, die von den Bremsbelägen übertragen werden müssen.

Für einen effektiven Bremsvorgang ist eine gute Übertragung der Bremskraft vom Scheibenbremsbelag auf die Bremsscheibe erforderlich. Es hat sich gezeigt, daß großflächige Reibkörper besonders große Bremsmomente auf die Bremsscheibe übertragen können. Bei Nässe besteht jedoch die Gefahr, daß derartige Reibkörper nicht mehr die gleiche Bremswirkung entfalten können wie bei Trockenheit. Man spricht auch von "Naßfading".

Bessere Naßlaufeigenschaften erhält man bei Unterteilung der Bremsbeläge in mehrere kleinere Reibkörper. Aus der DE-C 197 27 705 sind zylinderförmige Reibkörper bekannt, die auf der Ankerplatte aufgeschweißt oder aufgenietet sind. Die Reibkörper dieser bekannten Reibkörperanordnung sind nur punktförmig, beispielsweise mittels eines zentralen Niets mit der Ankerplatte verbunden. Aufgrund der hohen Bremsmomente und Hebelkräfte können sich derartige punktförmige Verbindungen im Betrieb lösen. Dies hat eine Verringerung der verfügbaren Bremsleistung und u. U. eine Zerstörung der gesamten Scheibenbremse zur Folge. Die besseren Naßlaufeigenschaften bekannter mehrgliedriger Bremsbeläge gingen daher zu Lasten der Standfestigkeit dieser Beläge.

Der Erfindung liegt die Aufgabe zugrunde, einen witterungsunabhängig wirksamen Bremsbelag zur Verfügung zu stellen, der wirtschaftlich herstellbar ist und eine gute Standfestigkeit hat.

Aus der DE-295 08 322 U ist ferner ein Bremsbelag für Scheibenbremsen für Schienenfahrzeuge bekannt, bei dem auf einer Trägerplatte mindestens ein Block aus einem gepreßten Reibwerkstoff befestigt ist. Zwischen dem Reibwerkstoffblock und der Trägerplatte ist ein Zwischenblech als Nietboden angeordnet. Der Reibwerkstoffblock ist auf der der Trägerplatte abgewandten Wandfläche des Zwischenblechs mittels mechanischer oder nicht mechanischer Verbindungsmittel befestigt. Großflächige Zwischenbleche sind mit mehreren Nieten mit der Trägerplatte verbunden; bei starker Unterteilung der Reibkörper und relativ kleinen Zwischenblechen ist jeweils nur ein Niet vorgesehen. Die Verwendung der Zwischenbleche dient dem Zweck, trotz der Verwendung von Nietverbindungen eine Wiederverwendung der Trägerplatte bei guter wirtschaftlicher Nutzung des Reibmaterials zu ermöglichen. Eine Verbesserung der Naßlaufeigenschaften wird dort weder angestrebt, noch erreicht.

Aus der US-A-5 538 108 ist ein anderer Scheibenbremsbelag für Schienen- oder Nutzfahrzeugen bekannt, bei dem mehrere zylindrische oder polygonale Belagelemente über jeweils eine zentrale und punktförmige Verbindung an einem federnden Arm einer Zwischenplatte gehaltert sind. Letztere ist an einem Belagträger befestigt.

Der Erfindung liegt die Aufgabe zugrunde, einen witterungsunabhängig wirksamen Bremsbelag zur Verfügung zu stellen, der wirtschaftlich herstellbar ist und eine gute Standfestigkeit hat.

Eine erste Lösung dieser Aufgabe besteht erfindungsgemäß in den Merkmalen des Patentanspruchs 1.

Eine zweite Lösung der genannten Aufgabe besteht erfindungsgemäß in den Merkmalen des Patentanspruch 7.

Die Erfindung vereint mehrere Vorteile. Ein wesentlicher Vorteil der Erfindung besteht darin, daß die Naßlaufeigenschaften sogar gegenüber herkömmlichen Scheibenbremsen mit mehrgliedrigen Bremsbelägen verbessert werden.

Für die Standfestigkeit wirkt sich auch die Befestigung jedes Reibkörpers mit mindestens zwei Nieten vorteilhaft aus. Selbst wenn sich ein Niet im Betrieb löst, so wird der Reibkörper von dem zweiten ggf. dritten Niet gehalten und somit die Gefahr einer Beschädigung der Scheibenbremse wesentlich verringert.

Die längliche Form (erste Lösung) bzw. die polygonale Form (zweite Lösung) der Reibfläche jedes Reibkörpers begünstigt einen gleichmäßigen Abrieb.

Auch die wirtschaftlichen Vorteile sind beträchtlich. Bei gleicher Bremsfläche im Vergleich zu einem Bremsbelag mit Zylinderreibkörpern können weniger Reibkörper auf der Ankerplatte befestigt werden. Mit der Verringerung der Anzahl der Reibkörper sinkt der Herstellungsaufwand. Dies ermöglicht eine kostengünstigere Fertigung.

Bei der ersten Lösung ist es besonders vorteilhaft, wenn gemäß einer Weiterbildung der Erfindung jeder Reibkörper mit drei in dessen Längsrichtung angeordneten Nieten auf der Ankerplatte befestigt ist.

Eine bevorzugte Ausführungsform der zweiten Lösung ist dadurch gekennzeichnet, daß jeder Reibkörper ein Umfangsprofil in Form eines gleichseitigen Dreiecks hat und über drei mit gleichem gegenseitigen Abstand angeordnete Nieten mit der Ankerplatte verbunden sind. Die im wesentlichen dreiekkige Umfangsprofil- und Grundrißform jedes Reibkörpers ermöglicht eine relativ dichte und gleichmäßige Anordnung und Verschachtelung der Reibkörper auf der Ankerplatte. Die Zwickelräume zwischen benachbarten Reibkörpern können relativ klein gemacht werden, so daß die einer Ankerplatte zugeordnete Reibfläche einerseits aufgelöst und andererseits relativ großflächig wirksam ist und eine entsprechend hohe Bremswirkung entfaltet.

Weitere vorteilhafte Weiterbildungen der Erfindung sind in den Unteransprüchen gekennzeichnet.

Im folgenden wird die Erfindung anhand von in der Zeichnung dargestellten Ausführungsbeispielen erläutert. In der Zeichnung zeigen:
- Fig. 1: eine Draufsicht auf ein erstes Ausführungsbeispiel eines erfindungsgemäßen Scheibenbremsbelages;
- Fig. 2: eine erste Seitenansicht;
- Fig. 3: eine zweite Seitenansicht;
- Fig. 4: eine Ansicht von unten auf das erste Ausführungsbeispiel;
- Fig. 5: eine schematische Draufsicht auf ein zweites Ausführungsbeispiel des erfindungsgemäßen Scheibenbremsbelags;
- Fig. 6: eine Schnittansicht entsprechend der Schnittlinie VI-VI in Figur 5.

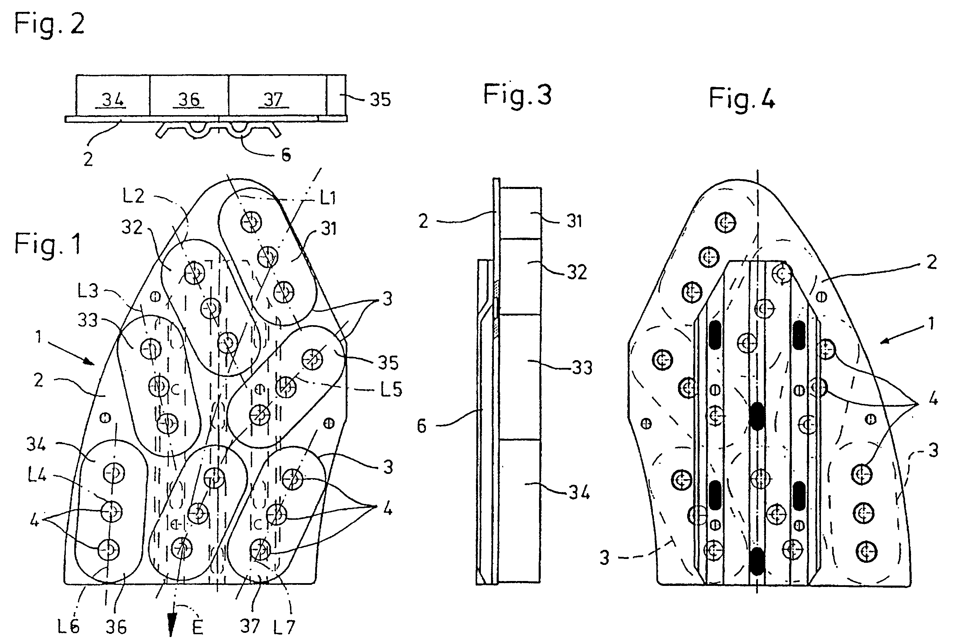

Der Scheibenbremsbelag 1 weist bei dem in den Figuren 1-4 dargestellten Ausführungsbeispiel eine Ankerplatte 2 und eine koplanare Anordnung von sieben Reibkörpern 3 auf, die jeweils mit drei Nieten 4 an der Ankerplatte 2 befestigt sind. Bei dem beschriebenen Ausführungsbeispiel besteht jeder Reibkörper 3 aus einem Topf mit einem stadionförmigen, langgestreckten Umfangsprofil. In den Topf ist ein geeignetes Reibmaterial eingepreßt. Das Reibmaterial ist in der Zeichnung fortgelassen, um die Sicht auf die die Reibkörper an der Ankerplatte fixierenden Nieten 4 freizulegen.

Auf der der Reibbelagsseite abgewandten Rückseite der Ankerplatte 2 ist ein Schwalbenschwanz 6 befestigt, mit dessen Hilfe der Bremsbelag 1 an einem in der Zeichnung nicht dargestellten Bremsbackenhalter festgelegt wird.

In Figur 1 sind die Richtungen der größten Längenausdehnung L1...L7 der insgesamt sieben Reibkörper 31...37 unter einem spitzen Winkel zu einer strichpunktierten Einlaufrichtung E angeordnet. Der Anstellwinkel α des Reibkörpers 31 ist in Fig. 1 veranschaulicht. Die langestreckten und stadionförmigen Reibkörper 3 haben teilweise unterschiedliche Anstellwinkel zur Einlaufrichtung E. Die Anstellwinkel der Reibkörper 31 und 32 sind etwa gleich. Der Anstellwinkel des Reibkörpers 33 ist spitzer, und noch spitzer ist der Anstellwinkel des Reibkörpers 34. Die Anstellwinkel der Reibkörper 35, 36 und 37 sind ebenfalls spitz, liegen aber in einem anderen Quadranten, d. h. die Richtungen L5...L7 der größten Längenausdehnungen der Reibkörper 35-37 sind unter einem spitzen Winkel zur anderen Seite der Einlaufrichtung E hin geneigt. In jedem Fall sind die Winkel α kleiner als oder allenfalls gleich 45°. Aufgrund dieser Schrägstellung der einzelnen Reibkörper 3 zur Einlaufrichtung E ergeben sich relativ gleichmäßige Bremsverteilungen und Abnutzungen der koplanaren Bremsflächen und damit ausgezeichnete Bremswirkungen. Die Naßlaufeigenschaften sind im Vergleich zu herkömmlichen mehrgliedrigen Bremsbelaganordnungen deutlich verbessert. Die Anzahl der Reibkörper ist für mehrgliedrige Bremsbeläge gering, so daß auch die Herstellung und Befestigung der Reibkörper 31 bis 37 kostengünstig sind.

Jeder einzelne Bremskörper ist über drei Niete 4 mit der Ankerplatte 2 verbunden. Alle drei Niete 4 sind auf der Achse der jeweils größten Längenausdehnung des Reibkörpers 3 angeordnet. Dadurch erhält der Reibkörper einen zuverlässigen und gleichmäßigen Halt auf der Ankerplatte 2, und die Gefahr des Lösens und Abscherens einer Nietverbindung oder gar aller Nietverbindungen eines Reibkörpers ist minimiert.

Anstelle der stadionförmigen Gestaltung des Umfangsprofils kann ein anderes längliches Profil der Reibkörper verwendet werden. Möglich sind ovale, prismenartige oder auch eckige Profile. Die stadionförmige Gestaltung des Umfangsprofils gewährleistet aber eine einfache Herstellung und vorzügliche Naßlaufeigenschaften. Eine andere günstige Umfangsprofilform wäre ein Parallelogramm mit nicht-rechtwinkligen Ecken. Bei dem beschriebenen Ausführungsbeispiel ist das Verhältnis Länge : Breite der Reibkörper etwa 2:1; je nach Einsatzfall können andere Querschnittsverhältnisse, z. B. zwischen 1,2:1 und 2,2:1 und mehr zweckmäßig sein.

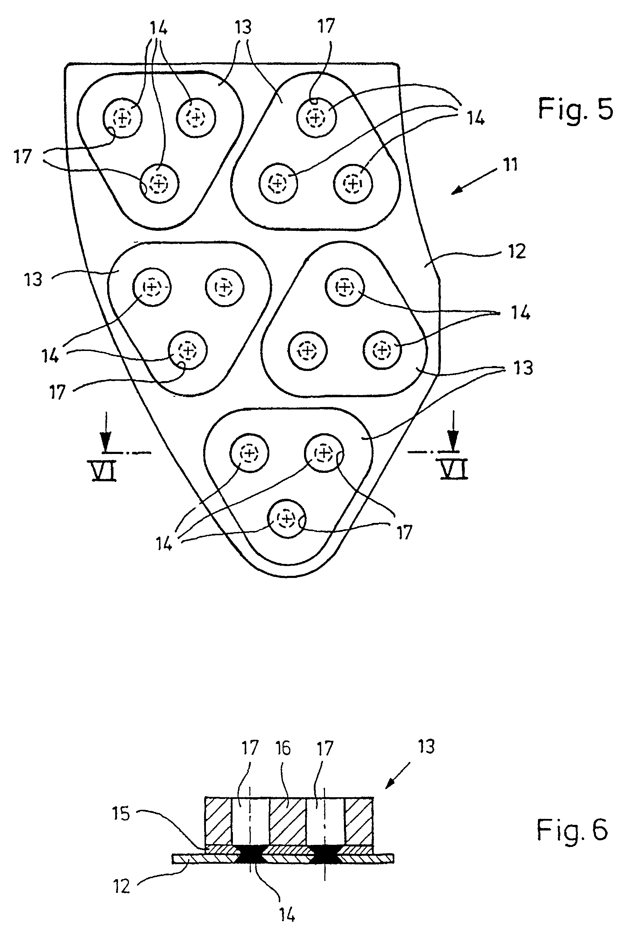

In den Figuren 5 und 6 ist ein anderes Ausführungsbeispiel eines Scheibenbremsbelags 11 gezeigt. Der Scheibenbremsbelag 11 weist eine Ankerplatte 12 ähnlicher Ausbildung wie diejenige gemäß dem zuvorbeschriebenen Ausführungsbeispiel und eine koplanare Anordnung von fünf Reibkörpern 13 auf, die jeweils mit drei Nieten 14 an der Ankerplatte 12 befestigt sind. Jeder Reibkörper hat eine polygonales, insbesondere dreieckiges Umfangsprofil mit abgerundeten Ecken. Alle drei Seiten haben gleiche Längen und sind nach Art eines gleichseitigen Dreiecks jeweils unter 60°-Winkeln zueinander angeordnet. Die dreieckigen Reibkörper 13 sind, wie Figur 5 zeigt, in engen Abständen zueinander derart angeordnet, daß die Zwickelräume relativ klein gehalten werden. Dies hat die Folge, daß die wirksamen Bremsflächen trotz der Vereinzelung der Reibkörper einen großen Prozentsatz der

Fläche der Ankerplatte 12 einnehmen. Die in Figur 5 dargestellte Anordnung der Reibkörper 13 mit dreieckigem Umfangsprofil hat ähnlich gute Maßlaufeigenschaften wie die Anordnung der Reibkörper 3 gemäß erstem Ausführungsbeispiel und eine ebenso hohe Standfestigkeit, da auch hier jeder Reibkörper mit drei Nieten 14 an der Ankerplatte 12 befestigt ist.

Wie Figur 6 zeigt, hat jeder Reibkörper 13 eine Grundplatte 15, auf der das Reibmaterial 16 befestigt ist. Die Reibmaterialschicht 16 ist in Ausrichtung mit den Nieten 14 mit Bohrungen 17 versehen, um die Nieten 14 mit geeigneten Nietwerkzeugen anbringen zu können. Die Reibmaterialschicht 16 kann aber auch in einem mit der Basisplatte 15 einteiligen Topf angeordnet sein, dessen Umfangsform der dargestellten Profilform des Reibkörpers 13 entspricht.

Anstelle eines gleichseitigen Dreiecks können auch andere polygonale Umfangsprofile vorgesehen sein, einschließliche dreieckiger Umfangsprofile mit unterschiedlich langen Seitenflächen. Die Zahl und Gestaltung der Seiten kann der Form der Trägerplatte angepaßt werden. Sie sollten jedoch aus wirtschaftlichen Gründen so gewählt werden, daß alle Reibkörper übereinstimmende Umfangsprofile haben und daher eine einfache und großtechnische Herstellung möglich ist.

Im Rahmen des Erfindungsgedankens sind zahlreiche Abwandlungen von dem in der Zeichnung dargestellten Ausführungsbeispiel möglich. Die Anzahl und genaue Umfangsform und Ausbildung der Reibkörper kann den jeweiligen Einsatzfällen und den anderen Randparametern angepaßt werden.

## Patentansprüche

1. Scheibenbremsbelag für Schienen- oder Nutzfahrzeuge, mit einer Ankerplatte (2) und mehreren auf der Ankerplatte befestigten Reibkörpern (3, 31...37);
wobei jeder Reibkörper ein längliches Umfangsprofil hat, und über mindestens zwei Nieten (4) mit der Ankerplatte (2) verbunden ist,
**dadurch gekennzeichnet,**
**daß** jeder Reibkörper mit Bohrungen zum Anbringen der Niete mit geeigneten Nietwerkzeugen versehen ist, und
**daß** die Richtung (L1...L7) der größten Längenausdehnung jedes Reibkörpers unter einem spitzen Winkel α zur Einlaufrichtung (E) angeordnet ist, wobei 0 < α ≤ 45°.

2. Scheibenbremsbelag nach Anspruch 1, **dadurch gekennzeichnet, daß** die Umfangsprofile der Reibkörper (3) stadionförmig mit zwei parallelen Seitenwänden und abgerundeten Endwänden ausgebildet sind.

3. Scheibenbremsbelag nach Anspruch 1, **dadurch gekennzeichnet, daß** die Reibkörper (5) ein ovales Umfangsprofil haben.

4. Scheibenbremsbelag nach einem der Ansprüche 1 bis 3, **dadurch gekennzeichnet, daß** jeder Reibkörper (31...37) mit drei in dessen Längsrichtung (L1...L7) angeordneten Nieten (4) auf der Ankerplatte (2) befestigt ist.

5. Scheibenbremsbelag nach einem der Ansprüche 1 bis 4, **dadurch gekennzeichnet, daß** die Richtungen (L1...L7) der größten Längenausdehnungen der Reibkörper zumindest (31...37) teilweise in unterschiedlichen spitzen Winkeln und/oder nach unterschiedlichen Seiten zur Einlaufrichtung (E) angestellt sind.

6. Scheibenbremsbelag nach einem der Ansprüche 1 bis 5, **dadurch gekennzeichnet, daß** das Verhältnis des größten zum kleinsten Reibkörperdurchmesser im Bereich von 1,2 - 2,2 liegt.

7. Scheibenbremsbelag mit einer Ankerplatte (12) und mehreren auf der Ankerplatte befestigten Reibkörpern, die ein polygonales Umfangsprofil haben,
**dadurch gekennzeichnet,**
**daß** jeder Reibkörper abgerundete Ecken hat und über mindestens zwei Nieten (14) direkt mit der Ankerplatte (12) verbunden und mit Bohrungen (17) zum Anbringen der Niete (14) mit geeigneten Nietwerkzeugen versehen ist.

8. Scheibenbremsbelag nach Anspruch 7, **dadurch gekennzeichnet, daß** jeder Reibkörper (13) ein Umfangsprofil in Form eines gleichseitigen Dreiecks hat und über drei mit gleichem gegenseitigen Abstand angeordnete Nieten (14) mit der Ankerplatte (2) verbunden ist.

## Claims

1. Disc brake lining for rail or utility vehicles including an anchor plate (2) and a plurality of frictional bodies (3, 31...37) secured to the anchor plate;
whereby each frictional body has an elongate peripheral profile and is connected to the anchor plate (2) by means of at least two rivets (4),
**characterised in that** each frictional body is provided with bores for applying the rivets with suitable riveting tools and
that the direction (L1...L7) of the greatest length of each frictional body is disposed at an acute angle α to the entry direction (E), whereby 0 < α ≤ 45°.

2. Disc brake lining as claimed in Claim 1, **characterised in that** the peripheral profiles of the frictional bodies (3) are of stadium-shape with two parallel side walls and rounded end walls.

3. Disc brake lining as claimed in Claim 1, **characterised in that** the frictional bodies (5) have an oval peripheral profile.

4. Disc brake lining as claimed in one of Claims 1 to 3, **characterised in that** each frictional body (31...37) is secured to the anchor plate (2) with three rivets (4) arranged in its longitudinal direction (L1...L7).

5. Disc brake lining as claimed in one of Claims 1 to 4, **characterised in that** the directions (L1...L7) of the greatest length of the frictional bodies are arranged at least partially (31...37) at different acute angles (2) and/or on different sides of the entry direction (E).

6. Disc brake lining as claimed in one of Claims 1 to 5, **characterised in that** the ratio of the largest to the smallest frictional body diameter is in the range of 1.2-2.2.

7. Disc brake lining including an anchor plate (12) and a plurality of frictional bodies secured to the anchor plate, which have a polygonal peripheral profile,
**characterised in that**
each frictional body has rounded corners and is connected directly to the anchor plate (12) by means of at least two rivets (14) and is provided with bores (17) for applying the rivets (14) with suitable riveting tools.

8. Disc brake lining as claimed in Claim 7, **characterised in that** each frictional body (13) has a peripheral profile in the shape of an equilateral triangle and is connected to the anchor plate (2) by means of three rivets (14) arranged at an equal mutual spacing.

## Revendications

1. Garniture de frein à disque pour véhicules sur rails ou utilitaires, comportant une plaque d'ancrage (2) et plusieurs corps de frottement (3, 31 à 37) fixés sur cette plaque d'ancrage,
chaque corps de frottement ayant un profil périphérique allongé et étant joint à la plaque d'ancrage (2) par au moins deux rivets (4),
**caractérisée par le fait**
**que** chaque corps de frottement est pourvu de trous pour l'application des rivets avec des outils de rivetage appropriés, et
**que** la direction (L1 à L7) de la plus grande étendue en longueur de chaque corps de frottement fait un angle aigu α avec la direction de rodage (E), avec 0 < α 45°.

2. Garniture de frein à disque selon la revendication 1, **caractérisée par le fait que** le profil périphérique des corps de frottement (3) est en forme de stade avec deux parois latérales parallèles et deux parois d'extrémité arrondies.

3. Garniture de frein à disque selon la revendication 1, **caractérisée par le fait que** les corps de frottement (5) ont un profil périphérique ovale.

4. Garniture de frein à disque selon l'une des revendications 1 à 3, **caractérisée par le fait que** chaque corps de frottement (31 à 37) est fixé sur la plaque d'ancrage (2) par trois rivets (4) placés dans la direction longitudinale (L1 à L7) de celui-ci.

5. Garniture de frein à disque selon l'une des revendications 1 à 4, **caractérisée par le fait que** les directions (L1 à L7) des plus grandes étendues en longueur des corps de frottement (31 à 37), au moins en partie, font des angles aigus différents avec la direction de rodage (E) et/ou sont orientés vers des côtés différents par rapport à cette direction.

6. Garniture de frein à disque selon l'une des revendications 1 à 5, **caractérisée par le fait que** le rapport du plus grand diamètre au plus petit diamètre des corps de frottement est compris entre 1,2 et 2,2.

7. Garniture de frein à disque comportant une plaque d'ancrage (12) et plusieurs corps de frottement fixés sur cette plaque d'ancrage qui ont un profil périphérique polygonal,
**caractérisée par le fait**
**que** chaque corps de frottement a des coins arrondis et est joint directement à la plaque d'ancrage (12) par au moins deux rivets (14) et est pourvu de trous (17) pour l'application des rivets (14) avec des outils de rivetage appropriés.

8. Garniture de frein à disque selon la revendication 7, **caractérisée par le fait que** chaque corps de frottement (13) a un profil périphérique en forme de triangle équilatéral et est joint à la plaque d'ancrage (2) par trois rivets (14) équidistants les uns des autres.
